# FASCICULE DE BREVET EUROPEEN

(11) **EP 3 629 573 B1**
(45) Date de publication et mention de la délivrance du brevet: **21.04.2021**
(21) Numéro de dépôt: 19199960.6
(22) Date de dépôt: 26.09.2019
(51) Int. Cl.: H04N 5/347, H01L 27/146, H04N 5/3745

(54) **CAPTEUR D'IMAGES RAPIDE A REGROUPEMENT DE PIXELS**
SCHNELLER BILDERFASSUNGSSENSOR MIT PIXEL-BINNING
QUICK IMAGE SENSOR WITH PIXEL BINNING

(30) Priorité: 27.09.2018 FR 1858870
(43) Date de publication de la demande: 01.04.2020
(73) Titulaire: Commissariat à l'énergie atomique et aux énergies alternatives, 75015 Paris (FR)
(72) Inventeur: MILLET, Laurent, 38054 Grenoble Cedex 09 (FR)
(74) Mandataire: Brevalex

(56) Documents cités:
- US-A1- 2002 196 170
- US-A1- 2010 118 167
- US-A1- 2011 068 860
- US-A1- 2018 247 969

## Description

### DOMAINE TECHNIQUE ET ART ANTÉRIEUR

L'invention porte sur le domaine de l'imagerie rapide, c'est-à-dire des capteurs d'images rapides, ou imageurs « burst », permettant de réaliser des captures d'images à des cadences allant du millier à des milliards d'images par seconde.

Pour atteindre des cadences de capture d'images très importantes, il est nécessaire qu'une quantité importante de lumière soit reçue par chaque pixel du capteur afin de réduire au maximum le temps d'exposition nécessaire aux pixels pour recevoir la quantité de lumière suffisante pour réaliser la capture de chaque image. Pour cela, les pixels des imageurs rapides ont des dimensions importantes, par exemple comprises entre environ 10 x 10 µm² et 50 x 50 µm².

Chaque pixel comporte un photodétecteur et un circuit de lecture associé au photodétecteur. Le photodétecteur correspond par exemple à une photodiode. Le circuit de lecture correspond par exemple à un amplificateur transimpédance capacitif (ou CTIA pour « Capacitive Translmpedance Amplifier »). Le circuit de lecture est relié à un élément de mémorisation pouvant correspondre à une capacité de stockage lorsque le signal délivré par le circuit de lecture est traité ensuite de manière analogique. L'élément de mémorisation peut également faire partie d'un convertisseur analogique - numérique (ou ADC pour « Analog Digital Converter ») qui comporte en entrée au moins une charge capacitive assurant un stockage temporaire du signal délivré par le circuit de lecture et reçu par l'ADC. Il est également possible d'avoir au moins une capacité présente entre le circuit de lecture et l'ADC, par exemple dans un circuit de type échantillonneur-bloqueur, et formant également un élément de mémorisation.

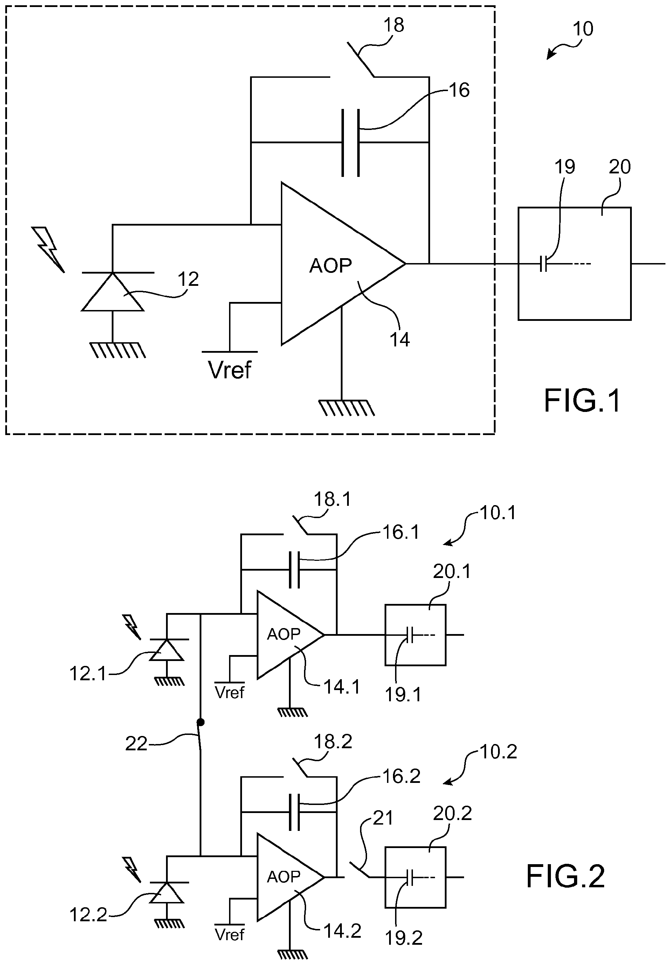

La figure 1 représente schématiquement un exemple de réalisation d'un pixel 10 d'un capteur d'images rapide. Ce pixel 10 comporte un photodétecteur correspondant ici à une photodiode 12. La photodiode 12 est reliée à un circuit de lecture du pixel comprenant ici un CTIA formé par un amplificateur opérationnel 14, une capacité d'intégration 16 couplant la sortie de l'amplificateur 14 à une première entrée de l'amplificateur 14, et un interrupteur de réinitialisation 18 relié en parallèle à la capacité 16. La photodiode 12 est reliée à la première entrée de l'amplificateur 14. Un potentiel électrique de référence « Vref » est appliqué sur une deuxième entrée de l'amplificateur 14. La sortie de l'amplificateur 14 est reliée à l'entrée d'un circuit 20 pouvant être un ADC ou un circuit de mémorisation analogique. L'entrée du circuit 20 présente une charge capacitive 19 qui assure une fonction de mémorisation ou d'échantillonnage temporaire du signal délivré par l'amplificateur 14.

Afin d'augmenter la cadence de capture d'images par l'imageur, il est possible de réaliser un « binning » de pixels, c'est-à-dire un regroupement de pixels. Chaque groupe de pixels, appelé macro-pixel, est dans ce cas considéré comme délivrant une seule information d'image en sortie du macro-pixel. Les photodétecteurs d'un macro-pixel délivrent des signaux à l'entrée d'un circuit de lecture d'un seul des pixels du macro-pixel afin que ce circuit de lecture réalise la lecture de tous les signaux reçus depuis les photodétecteurs.

Ce regroupement de pixels permet d'augmenter la cadence de capture d'images puisque les informations délivrées par les pixels d'un même macro-pixel sont considérées non pas comme plusieurs informations à traiter individuellement les unes après les autres mais comme une unique information à traiter. Par exemple, si un tel regroupement est réalisé en formant des macro-pixels composés de deux pixels, la vitesse de lecture du capteur peut être multipliée par deux. En outre, la surface de capture totale d'un macro-pixel est plus importante que la surface individuelle de chaque pixel, ce qui contribue à l'augmentation de la cadence de capture en raison de la plus grande sensibilité apportée par la plus grande surface de capture du macro-pixel pour chaque information à traiter.

La figure 2 représente schématiquement un exemple de réalisation de deux pixels 10.1 et 10.2, chacun formé par des composants analogues à ceux du pixel 10 précédemment décrit en lien avec la figure 1, et groupés pour former un seul macro-pixel. Pour cela, les photodiodes 12.1, 12.2 sont reliées à l'entrée d'un des circuits de lecture réalisant la lecture des courants délivrés par les deux photodiodes 12.1, 12.2. Cette liaison est obtenue via la fermeture d'un interrupteur 22 permettant de relier la photodiode 12.2 du deuxième pixel 10.2 à l'entrée du CTIA du premier pixel 10.1. La sortie du CTIA du deuxième pixel 10.2 est déconnectée de l'ADC 20.2 associé au deuxième pixel 10.2 en ouvrant un autre interrupteur 21 interposé entre la sortie du CTIA du deuxième pixel 10.2 et l'ADC 20.2. Dans le premier pixel 10.1, la sortie du CTIA est bien reliée électriquement à l'ADC 20.1 associé au premier pixel 10.1.

Ainsi, seul le CTIA du premier pixel 10.1 réalise la lecture des signaux délivrés par les photodiodes 12.1, 12.2 des deux pixels 10.1, 10.2. Lors d'une capture d'image, les deux photodiodes 12.1 et 12.2 délivrent chacune un courant en entrée du CTIA du premier pixel 10.1 qui réalise la lecture de la somme de ces deux courants. Le signal délivré en sortie du CTIA du premier pixel 10.1 est mémorisé et converti par l'ADC 20.1 associé au premier pixel 10.1.

Avec un tel regroupement de pixels, la vitesse de fonctionnement des éléments de mémorisation (les ADC associés aux charges capacitives 19 dans les exemples précédents) est faiblement impactée par ces regroupements, du fait que les ADC traiteront plus rapidement moins de pixels. Par contre, ce regroupement de pixels impose aux circuits de lecture de fonctionner plus rapidement par rapport à la configuration initiale où tous les circuits de lecture des pixels fonctionnaient en parallèle, afin d'aboutir à la cadence de capture d'images souhaitée. Or, ce fonctionnement plus rapide des circuits de lecture peut poser un problème vis-à-vis de la charge des capacités formant les éléments de mémorisation, le temps disponible pouvant ne pas être suffisant pour que, pour chaque groupe de pixels, le circuit de lecture qui est actif puisse charger suffisamment la capacité de l'élément de mémorisation associé au groupe de pixels.

Une solution à ce problème consiste à augmenter les dimensions des composants (notamment des transistors) des circuits de lecture. Ce surdimensionnement des composants des circuits de lecture permet d'augmenter la cadence de fonctionnement de ces circuits, mais cette solution pose dans ce cas un problème d'encombrement des composants des circuits de lecture dans les pixels. De plus, cette solution n'est pas optimale lors d'une utilisation standard du capteur, c'est-à-dire lorsque celui-ci n'est pas configuré pour réaliser un regroupement de pixels.

### EXPOSÉ DE L'INVENTION

Un but de la présente invention est de proposer un capteur d'images rapide ne présentant pas les inconvénients décrits ci-dessus, c'est-à-dire qui soit configurable pour réaliser un regroupement de pixels (« binning ») compatible avec une cadence de capture élevée, et cela sans surdimensionnement des composants des circuits de lecture par rapport à un même capteur fonctionnant sans regroupement de pixels.

Pour cela, la présente invention propose un capteur d'images, comprenant au moins une matrice de pixels dans laquelle chaque pixel comporte au moins :
- un photodétecteur ;
- un circuit de lecture comprenant une entrée couplée, ou connectée, au photodétecteur du pixel, et configuré pour délivrer en sortie un signal de lecture représentatif d'un signal de photodétection délivré par le photodétecteur ;
et dans lequel le capteur d'images comporte également des moyens de regroupement de pixels configurés pour former des macro-pixels tels que dans chaque macro-pixel, les entrées des circuits de lecture d'au moins deux pixels sont couplées l'une à l'autre, et les sorties des circuits de lecture desdits au moins deux pixels sont couplées à l'entrée d'un seul élément de mémorisation comprenant au moins une capacité.
Il est notamment proposé un capteur d'images, comprenant au moins une matrice de pixels dans laquelle chaque pixel comporte au moins :
- un photodétecteur ;
- un circuit de lecture comprenant une entrée couplée au photodétecteur du pixel, un élément d'amplification actif configuré pour recevoir en entrée un signal de photodétection destiné à être délivré par le photodétecteur et pour délivrer en sortie un signal de lecture représentatif du signal de photodétection ;
et dans lequel :
- le capteur d'images comporte également des moyens de regroupement de pixels configurés pour former des macro-pixels tels que dans chaque macro-pixel, les entrées des circuits de lecture d'au moins deux pixels sont couplées l'une à l'autre, et les sorties des circuits de lecture desdits au moins deux pixels sont couplées à l'entrée d'un seul élément de mémorisation comprenant au moins une capacité ;
- la sortie de chaque circuit de lecture est couplée à une entrée d'un élément de mémorisation différent de ceux auxquels les sorties des circuits de lecture des autres pixels sont reliées ;
- les moyens de regroupement de pixels comportent des interrupteurs de connexion des circuits de lecture interposés entre les sorties des circuits de lecture et les entrées des éléments de mémorisation.

Dans ce capteur d'images, lors d'un regroupement de pixels, les circuits de lecture des pixels regroupés dans un même macro-pixel sont couplés, ou connectés, en parallèle et se comportent comme un plus large circuit de lecture résultant, réalisant la lecture de la somme des signaux de photodétection délivrés par les photodétecteurs. Les signaux de lecture délivrés en sortie des circuits de lecture sont ensuite envoyés à l'entrée d'un seul élément de mémorisation. Ce fonctionnement en parallèle des circuits de lecture permet au capteur d'images de fonctionner avec des cadences de capture importantes, sans que cela pose des problèmes de charge des capacités des éléments de mémorisation puisque dans cette configuration, grâce à la présence des éléments d'amplification actifs dans les circuits de lecture, les sortances, ou courants de sortie, des circuits de lecture se cumulent, ce qui permet de réaliser une charge rapide des capacités des éléments de mémorisation, et cela sans avoir à surdimensionner les composants des circuits de lecture par rapport à un capteur d'images similaire dans lequel les pixels ne sont pas regroupés.

Un macro-pixel désigne plusieurs pixels regroupés tels que, lors d'une lecture des pixels, les signaux de lecture délivrés par les circuits de lecture de ces pixels soient considérés ensemble comme une seule information globale représentative du signal lumineux capturé au niveau de l'ensemble du macro-pixel.

Dans chaque circuit de lecture, l'élément d'amplification est qualifié de « actif » car il est capable de générer un courant.

Le terme « couplé » est utilisé dans ce document pour désigner une liaison ou une connexion, de préférence électrique, pouvant être directe ou indirecte entre deux éléments couplés l'un à l'autre, c'est-à-dire avec ou sans élément intermédiaire interposé entre les deux éléments couplés l'un à l'autre.

Chaque macro-pixel est formé d'au moins deux pixels, et comporte avantageusement un nombre de pixels compris entre environ 2 et 10 pixels.

Les circuits de lecture du capteur d'images peuvent être similaires les uns des autres.

Un élément de mémorisation correspond ici à un composant ou un circuit électronique assurant une fonction de mémorisation, temporaire ou non. La fonction principale de l'élément de mémorisation peut être une fonction de mémorisation, ou bien une autre fonction, comme par exemple une fonction de conversion analogique - numérique ou une fonction d'échantillonnage temporaire lorsque l'élément de conversion correspond à une charge capacitive d'un ADC.

La sortie de chaque circuit de lecture est couplée à une entrée d'un élément de mémorisation différent de ceux auxquels les sorties des circuits de lecture des autres pixels sont reliées, et les moyens de regroupement de pixels comportent des interrupteurs de connexion des circuits de lecture interposés entre les sorties des circuits de lecture et les entrées des éléments de mémorisation. Lors d'un fonctionnement du capteur d'images dans lequel les pixels sont regroupés pour former des macro-pixels, une partie des interrupteurs de connexion des circuits de lecture peuvent être ouverts afin que dans chaque macro-pixel, les sorties des circuits de lecture des pixels du macro-pixel ne soient couplées qu'à un seul élément de mémorisation assurant au moins une mémorisation des signaux de lecture délivrés par les circuits de lecture des pixels formant le macro-pixel. Du fait que chaque circuit de lecture comporte un élément d'amplification actif, ce regroupement de pixels permet d'obtenir une augmentation de la bande passante du capteur grâce au cumul des signaux de sortie des circuits de lecture.

En conservant ces interrupteurs de connexion fermés, le capteur peut fonctionner de manière standard, c'est-à-dire sans réaliser de regroupement de pixels, chaque pixel étant relié à l'élément de mémorisation qui lui est associé.

La matrice de pixels peut être disposée dans un premier substrat, et les éléments de mémorisation peuvent être disposés dans un deuxième substrat distinct et superposé au premier substrat. Les circuits de lecture peuvent être disposés dans le premier substrat, par exemple au sein des pixels, ou dans le deuxième substrat.

Chaque pixel peut avoir des dimensions comprises entre environ 10 x 10 µm² et 50 x 50 µm².

Les signaux de photodétection peuvent correspondre à des courants de photodétection, et les signaux de sortie des circuits de lecture, appelés signaux de lecture, peuvent correspondre à des tensions de lecture.

Chaque élément de mémorisation peut correspondre à une charge capacitive d'un convertisseur analogique / numérique (ADC), ou à une capacité de stockage, ou à une capacité présente entre le circuit de lecture et l'ADC.

Chaque photodétecteur peut comporter au moins une photodiode.

Selon un premier mode de réalisation, chaque circuit de lecture peut comporter au moins un amplificateur transimpédance capacitif formant l'élément d'amplification actif du circuit de lecture.

Chaque amplificateur transimpédance capacitif peut comporter au moins :
- un amplificateur opérationnel ;
- une capacité d'intégration couplant la sortie de l'amplificateur opérationnel à une première entrée de l'amplificateur opérationnel, et
- un interrupteur de réinitialisation couplé en parallèle à la capacité d'intégration ;
- un interrupteur de connexion de la capacité d'intégration interposé entre l'entrée de l'amplificateur opérationnel et une première électrode de la capacité d'intégration.

Dans chaque macro-pixel, lorsque le capteur d'images fonctionne en réalisant un regroupement de pixels, l'interrupteur de connexion de la capacité d'intégration d'un seul circuit de lecture peut être en position fermée, le ou les autres interrupteurs de connexion de la capacité d'intégration du ou des autres circuits de lecture du macro-pixel pouvant être en position ouverte, afin de ne coupler qu'une seule capacité d'intégration d'un des circuits de lecture en parallèle des amplificateurs opérationnels des circuits de lecture du macro-pixel. Le fait de ne laisser qu'une seule capacité d'intégration connectée au sein d'un macro-pixel permet d'intégrer la totalité des photocourants générés par les photodétecteurs du macro-pixel sur une plus faible capacité, et ainsi bénéficier d'un plus fort gain en tension en sortie du circuit de lecture puisque cette capacité sera plus rapidement remplie.

Selon un deuxième mode de réalisation, chaque circuit de lecture peut comporter au moins :
- un premier transistor de remise à zéro du pixel,
- un deuxième transistor monté en drain commun comprenant sa grille couplée au photodétecteur associé au circuit de lecture,
- une source de courant couplée à la source du deuxième transistor et formant, avec le deuxième transistor, l'élément d'amplification actif du circuit de lecture,
- un troisième transistor de sélection configuré pour connecter le circuit de lecture à l'élément de mémorisation associé au dit circuit de lecture, comprenant une première électrode de source ou de drain couplée à la source du deuxième transistor et une deuxième électrode de source ou de drain formant la sortie du circuit de lecture qui est couplée au dit élément de mémorisation.

Dans ce deuxième mode de réalisation, chaque circuit de lecture peut comporter en outre :
- un nœud de mémorisation couplé à la grille du deuxième transistor, formant une capacité couplée en parallèle du premier transistor,
- un quatrième transistor de transfert interposé entre la grille du deuxième transistor et l'entrée du circuit de lecture.

En outre, la sortie de chaque élément de mémorisation peut être couplée à un transistor monté en drain commun, dont la grille est couplée à la capacité de l'élément de mémorisation et dont le drain est couplé à une source de courant.

En variante, chaque circuit de lecture peut être associé à plusieurs sous-pixels configurés pour réaliser une détection de gammes de longueurs d'onde différentes et destinés à être lus successivement par le circuit de lecture, le circuit de lecture pouvant comporter plusieurs transistors de transfert comprenant chacun une première électrode de source ou de drain couplée au photodétecteur de l'un des sous-pixels associés au circuit de lecture.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente un exemple de réalisation d'un pixel d'un capteur d'images rapide de l'art antérieur ;
- la figure 2 représente un exemple de réalisation de deux pixels regroupés formant un macro-pixel d'un capteur d'images rapide de l'art antérieur;
- la figure 3 représente schématiquement un capteur d'images, objet de la présente invention ;
- la figure 4 représente un capteur d'images comprenant plusieurs pixels regroupés dans un macro-pixel, selon un premier mode de réalisation ;
- la figure 5 représente un capteur d'images comprenant plusieurs pixels regroupés dans un macro-pixel, selon un exemple utile à la compréhension de l'invention ;
- la figure 6 représente un capteur d'images comprenant plusieurs pixels regroupés dans un macro-pixel, selon un autre exemple utile à la compréhension de l'invention ;
- la figure 7 représente un capteur d'images comprenant plusieurs pixels regroupés dans un macro-pixel, selon un deuxième mode de réalisation ;
- les figures 8 à 10 représentent des exemples de réalisation de pixels du capteur d'images selon le deuxième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

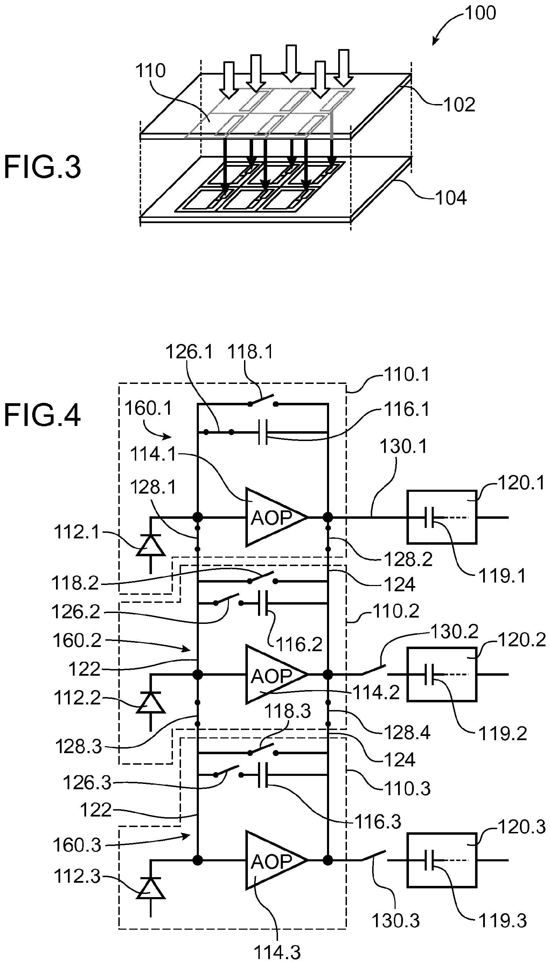

On se réfère tout d'abord à la figure 3 qui représente schématiquement un capteur d'images 100 selon un exemple de réalisation particulier.

Le capteur 100 correspond à un capteur d'images rapide, ou imageur « burst ». Dans cet exemple de réalisation, le capteur 100 est réalisé sous la forme d'un circuit électronique 3D (tridimensionnel) et comporte une matrice de pixels 110 formée dans un premier substrat 102 et des circuits électroniques de traitement réalisés dans le premier substrat 102 et dans un deuxième substrat 104 distinct du premier substrat 102 et superposé au premier substrat 102.

Le capteur 100 comporte des moyens de regroupement de pixels, ou de « binning », permettant de former, à partir des pixels 110 de la matrice, des macro-pixels, afin d'augmenter la cadence de capture d'images du capteur 100 (générant toutefois des images comprenant chacune moins de pixels que les images obtenues lorsque les pixels ne sont pas regroupés en macro-pixels).

La figure 4 représente trois pixels 110, référencés 110.1, 110.2 et 110.3, du capteur 100 regroupés au sein d'un seul macro-pixel, selon un premier mode de réalisation.

Chacun des trois pixels 110 comporte un photodétecteur 112 (référencés 112.1, 112.2 et 112.3 sur la figure 4), correspondant par exemple à une photodiode.

Chacun des trois pixels 110 comporte également un circuit de lecture 160 (références 160.1 - 160.3 sur la figure 4). Chaque circuit de lecture 160 est réalisé au sein d'un des pixels. Dans ce premier mode de réalisation, les circuits de lecture 160 comportent des éléments d'amplification actifs correspondant à des CTIA comprenant chacun un amplificateur opérationnel (AOP) 114 (référencés 114.1, 114.2 et 114.3 sur la figure 4), une capacité d'intégration 116 (référencées 116.1, 116.2 et 116.3 sur la figure 4) et un interrupteur de réinitialisation 118 (référencés 118.1, 118.2 et 118.3 sur la figure 4).

Les photodétecteurs 112 et les circuits de lecture 160 qui leur sont associés sont ici réalisés dans le premier substrat 102. La sortie de chacun des circuits de lecture 160 est couplée à un élément de mémorisation correspondant ici à une charge capacitive 119 (référencées 119.1, 119.2 et 119.3) d'un ADC 120 (référencés 120.1, 120.2 et 120.3). Les ADC 120 sont ici réalisés dans le deuxième substrat 104.

Des premières liaisons électriques 122 couplent électriquement entre elles les entrées des circuits de lecture 160, et des deuxièmes liaisons électriques 124 couplent électriquement entre elles les sorties des circuits de lecture 160. Les circuits de lecture 160 sont ainsi couplés en parallèle les uns des autres.

Des interrupteurs 126 (référencés 126.1, 126.2 et 126.3 sur la figure 4) de connexion des capacités d'intégration 116 sont interposés entre des premières électrodes des capacités d'intégration 116 et les entrées des amplificateurs 114, et des interrupteurs 128 (référencés 128.1 à 128.4 sur la figure 4) de connexion des pixels 110 sont interposés sur les premières et deuxièmes liaisons électriques 122, 124, entre les pixels 110.

Sur l'exemple représenté sur la figure 4, les interrupteurs 126.2, 126.3 sont en position ouverte, et l'interrupteur 126.1 est en position fermée afin que seule la capacité d'intégration 116.1 soit couplée en parallèle aux trois amplificateurs 114, les deux autres capacités d'intégration 116.2 et 116.3 étant déconnectées des circuits de lecture 160.

Dans la configuration représentée sur la figure 4, les trois pixels 110.1, 110.2 et 110.3 forment un seul macro-pixel, les interrupteurs 128.1 à 128.4 étant en position fermée afin de relier en parallèle les circuits de lecture 160 des trois pixels 110.1, 110.2 et 110.3. Lors d'une capture d'images, les trois photodétecteurs 112.1, 112.2, 112.3 délivrent des courants de photodétection sur les entrées des trois amplificateurs opérationnels 114.1, 114.2, 114.3. Ainsi, les trois amplificateurs 114.1, 114.2, 114.3 des trois circuits de lecture 160 coopèrent pour lire les signaux de photodétection délivrés par les photodiodes 112 des trois pixels 110.1, 110.2 et 110.3.

La sortie de chacun des circuits de lecture 160 des pixels 110 est couplée à l'entrée d'un des ADC 120. Afin que le signal lu par les trois circuits de lecture 160 soit envoyé à l'entrée d'un seul ADC 120, des interrupteurs 130 (référencés 130.1, 130.2 et 130.3 sur la figure 4) de connexion des circuits de lecture 160 sont interposés entre la sortie de chaque circuit de lecture 160 et l'entrée de chaque ADC 120. Dans la configuration représentée sur la figure 4, les deux interrupteurs 130.2 et 130.3 sont en position ouverte et l'interrupteur 130.1 est en position fermée afin que seul l'ADC 120.1 reçoive en entrée les signaux de lecture délivrés par les circuits de lecture 160 des pixels 110.

La mise en parallèle des amplificateurs 114 permet de cumuler leur sortance, c'est-à-dire leur courant de sortie, afin que la charge de la capacité de stockage de l'ADC 120.1 soit accélérée grâce au regroupement de pixels réalisé.

Le capteur 100 comporte d'autres éléments électroniques de traitement auxquels les sorties des ADC 120, ou plus généralement les sorties des circuits de lecture 160, sont couplées. Ces éléments électroniques ne sont pas décrits en détail ici, ni pour les autres modes de réalisation.

Dans le premier mode de réalisation décrit ci-dessus, les éléments de mémorisation auxquels les sorties des circuits de lecture des pixels sont couplées correspondent à des charges capacitives des ADC. En variante, ces éléments de mémorisation peuvent correspondre à des circuits électroniques différents de ces ADC, mais comportant au moins une capacité. De tels circuits de mémorisation sont par exemple décrits dans le document « In-Pixel Storage Techniques for CMOS Burst-Mode Ultra-High-Speed Imagers » de L. Wu et al., 2017, : Conference: 2017 International Image Sensors Workshop, Hiroshima, Japan. Selon une autre variante, les éléments de mémorisation auxquels les sorties des circuits de lecture des pixels sont couplées peuvent correspondre à des capacités de stockage temporaire de circuits de type échantillonneur-bloqueur. Selon une autre variante, pour un capteur fonctionnant en analogique, les éléments de mémorisation peuvent correspondre à des capacités de stockage.

En outre, le regroupement de pixels décrit ci-dessus en lien avec les pixels de la figure 4 est tel que chaque macro-pixel peut comporter un nombre de pixels compris entre environ 2 et 10.

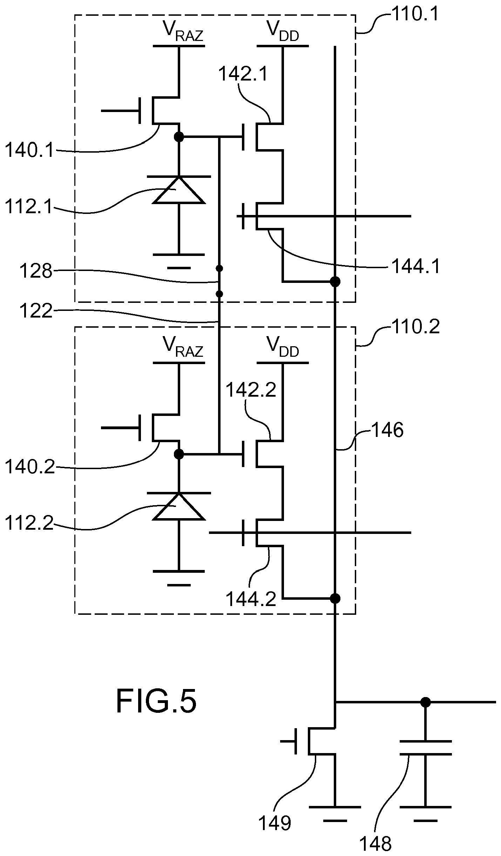

Dans le premier mode de réalisation décrit ci-dessus, le circuit de lecture 160 de chaque pixel 110 comporte un CTIA. La figure 5 représente deux pixels 110.1, 110.2 du capteur 100 selon un exemple utile à la compréhension de l'invention et dans lesquels les circuits de lecture des pixels 110 ne comportent pas de CTIA mais correspondent à des circuits de type 3T (à trois transistors). Les transistors des circuits de lecture correspondent par exemple à des transistors à effet de champ, avantageusement des MOSFET.

Dans cet exemple, chaque circuit de lecture comporte un premier transistor 140 (référencés 140.1 et 140.2 sur la figure 5) permettant de remettre à zéro les pixels 110, via l'application de la tension de remise à zéro V_{RAZ} aux bornes des photodétecteurs 112 lorsque les premiers transistors 140 sont à l'état passant.

Chaque circuit de lecture comporte également un deuxième transistor 142 (référencés 142.1 et 142.2 sur la figure 5) monté en drain commun (et également appelé « source follower » en anglais) dont la grille formant l'entrée du circuit de lecture est couplée au photodétecteur 112 associé au circuit de lecture. Du fait que les deux pixels 110.1, 110.2 sont ici regroupés pour former un macro-pixel, les grilles des deuxièmes transistors 142.1 et 142.2 sont couplées électriquement l'une à l'autre par la liaison électrique 122 et l'interrupteur 128, couplant ainsi l'une à l'autre les entrées des deux circuits de lecture des pixels 110.1, 110.2. L'interrupteur 128 permet de mettre en commun les photodétecteurs 112 ou de les séparer, selon le mode de fonctionnement souhaité (binning ou non).

Chaque circuit de lecture comporte également un troisième transistor 144 (référencés 144.1 et 144.2 sur la figure 5) configuré pour connecter le circuit de lecture à la ligne de sortie 146 et comprenant une première électrode de source ou de drain (drain dans le cas d'un troisième transistor 144 NMOS comme sur l'exemple de la figure 5) couplée au deuxième transistor 142 (reliée à la source du deuxième transistor 142 NMOS sur l'exemple de la figure 5), et une deuxième électrode de source ou de drain (source sur l'exemple de la figure 5) formant la sortie du circuit de lecture et qui est couplée à la ligne de sortie 146 de la matrice de pixel. Les circuits de lecture des deux pixels 110.1, 110.2 délivrent sur la ligne 146 les signaux de lecture délivrés par les deuxièmes transistors 142 lorsque les troisièmes transistors 144 sont à l'état passant. Ainsi, les sorties des circuits de lecture de deux pixels 110.1, 110.2 sont couplées électriquement l'une à l'autre de manière à délivrer en sortie une seule information d'image par macro-pixel.

Les sorties des circuits de lecture des deux pixels 110.1, 110.2 sont couplées, par l'intermédiaire de la ligne 146, à l'entrée d'un élément de mémorisation correspondant ici à une capacité de stockage 148. Un transistor 149 permet de polariser le circuit de lecture, lequel impose une tension de lecture dans la capacité de stockage 148 à travers la ligne de sortie 146.

Contrairement au premier mode de réalisation, la mise en parallèle des circuits de lecture ne permet pas ici de sommer les courants des signaux de délivrés par les deuxièmes transistors 142 du fait que c'est le transistor 149 présent en bas de chaque colonne qui impose la tension de lecture appliquée à l'entrée du circuit de mémorisation correspondant à la capacité de stockage 148.

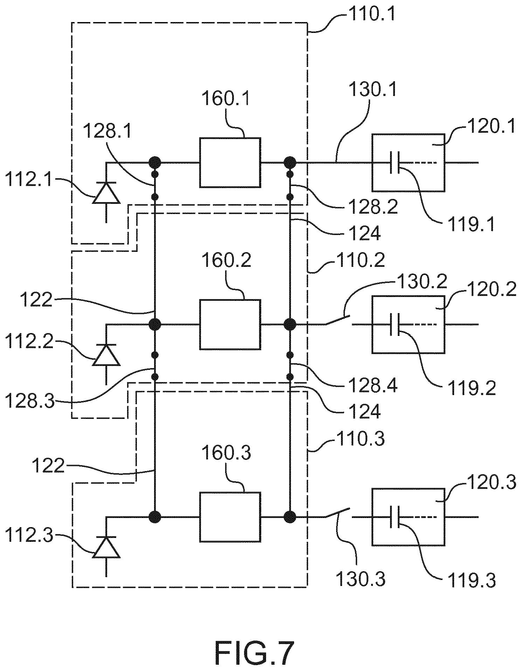

La figure 7 représente trois pixels 110, référencés 110.1, 110.2 et 110.3, du capteur 100 regroupés au sein d'un seul macro-pixel, selon un deuxième mode de réalisation.

Ces pixels comportent tous les éléments précédemment décrits en lien avec le premier mode de réalisation représenté sur la figure 4. Toutefois, par rapport au premier mode de réalisation, le circuit de lecture (portant la référence 160 sur la figure 7) de chaque pixel 110 un élément d'amplification actif différent de celui précédemment décrit dans le premier mode de réalisation.

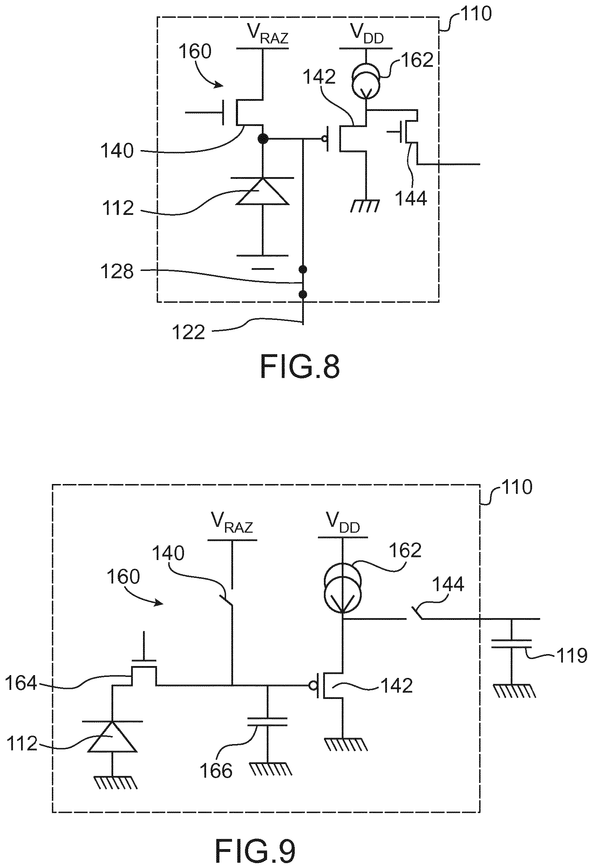

La figure 8 représente un premier exemple de réalisation d'un tel pixel 110 comportant un élément d'amplification actif qui ne correspond pas à un CTIA. Dans ce premier exemple qui correspond à un pixel 3T, l'élément d'amplification actif du circuit de lecture 160 du pixel 110 est formé par le transistor 142 monté en drain commun et une source de courant 162, par exemple formée par un transistor, qui est couplée à la source du transistor 142. Dans l'exemple de réalisation représenté sur la figure 8, le transistor 142 est de type P. Grâce à cet élément d'amplification actif, lors d'un regroupement de pixel, les courants de sortie des pixels regroupés se cumulent et sont mémorisés dans un même élément de mémorisation.

La figure 9 représente un deuxième exemple de réalisation d'un tel pixel 110 comportant un élément d'amplification actif qui ne correspond pas à un CTIA. Dans ce deuxième exemple qui correspond à un pixel 4T, l'élément d'amplification actif du circuit de lecture 160 du pixel 110 est formé par le transistor 142 monté en drain commun et une source de courant 162, par exemple formée par un transistor, qui est couplée à la source du transistor 142, comme dans le premier exemple de la figure 8. En plus des éléments du pixel de la figure 8, ce pixel 110 comporte un transistor de transfert 164 interposé entre la grille du transistor 142 et l'entrée du circuit de lecture 160, ainsi qu'un nœud de mémorisation couplé à la grille du transistor 142 et formant une capacité 166 couplée en parallèle du transistor 140.

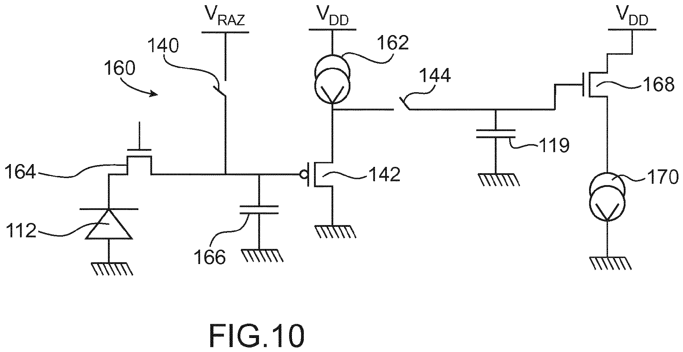

De manière avantageuse, la sortie de chaque élément de mémorisation est couplée à un transistor 168 monté en drain commun, dont la grille est couplée à la capacité 119 de l'élément de mémorisation. Le drain du transistor 168 est couplé à une source de courant 170. Le transistor 168 et la source de courant 170 forme un deuxième élément d'amplification actif. Une telle configuration est représentée sur la figure 10.

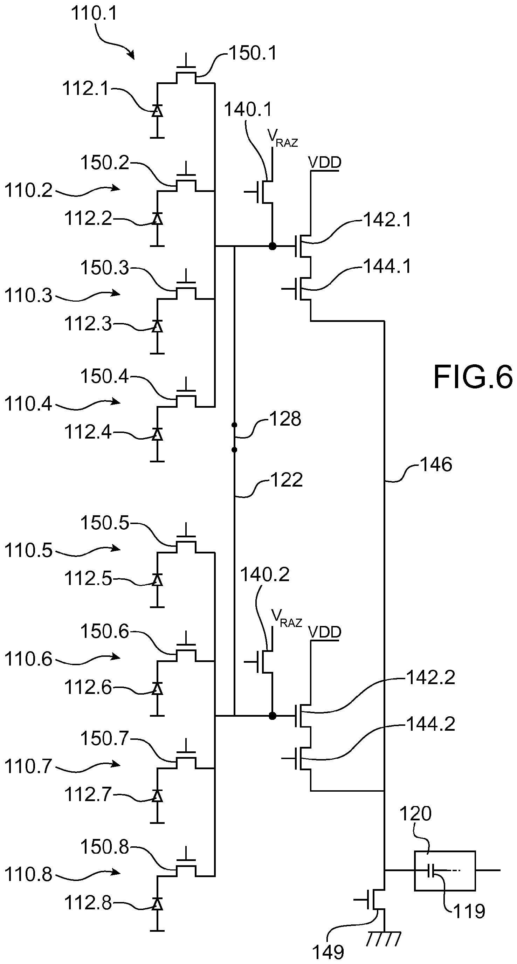

La figure 6 représente huit pixels 110.1 - 110.8 du capteur 100 selon un autre exemple utile à la compréhension de l'invention, dans lesquels les circuits de lecture des pixels 110 correspondent à des circuits de type 1,75 T (1,75 transistors). Les transistors des circuits de lecture correspondent par exemple à des transistors à effet de champ, avantageusement des MOSFET.

Dans les deux précédents modes de réalisation décrits ci-dessus, tous les pixels groupés dans chaque macro-pixel sont destinés à être lus simultanément, et chaque photodétecteur comporte un circuit de lecture qui lui est associé. Dans le troisième mode de réalisation décrit ici, chaque circuit de lecture est associé à plusieurs pixels destinés à être lus successivement par le circuit de lecture et qui peuvent être configurés pour réaliser une détection de différentes gammes de longueurs d'onde. Sur l'exemple de la figure 6, les pixels 110 sont agencés en formant une matrice de Bayer tels que :
- les pixels 110.1 et 110.5 sont destinés à réaliser une détection de longueurs d'onde correspondant à la couleur bleue ;
- les pixels 110.2 et 110.6 sont destinés à réaliser une détection de longueurs d'onde correspondant à la couleur rouge ;
- les pixels 110.3, 110.4, 110.7 et 110.8 sont destinés à réaliser une détection de longueurs d'onde correspondant à la couleur verte.

D'autres configurations, en termes de nombres de pixels et/ou de gammes de longueurs d'onde détectées, sont possibles.

Les pixels 110.1 - 110.4 sont associés à un premier circuit de lecture, et les pixels 110.5 - 110.8 sont associés à un deuxième circuit de lecture.

Chaque pixel 110 comporte un photodétecteur 112 (référencés 112.1 - 112.8 sur la figure 6). Chaque photodétecteur 112 est couplé à l'un des deux circuits de lecture des pixels 110.

Les circuits de lecture des pixels 110 comportent des transistors de transfert (« tranfert gate » en anglais) 150 (référencés 150.1 - 150.8) comprenant chacun une première électrode de source ou de drain couplée au photodétecteur 112 de l'un des pixels associés au circuit de lecture et permettant chacun, à l'état passant, de délivrer le signal de photodétection généré par le photodétecteur 112 au circuit de lecture qui lui est associé.

Les autres composants formant les circuits de lecture sont partagés par plusieurs pixels, ici par quatre pixels. Pour les quatre pixels 110.1 - 110.4, ces composants correspondent à :
- un premier transistor 140.1 permettant de remettre à zéro les pixels 110.1 - 110.4 en appliquant la tension d'alimentation V_{RAZ} aux bornes des photodétecteurs 112 lorsque le premier transistor 140.1 est à l'état passant et que les transistors de transfert 150 des pixels à remettre à zéro sont également à l'état passant ;
- un deuxième transistor 142.1 monté en drain commun et comprenant sa grille formant l'entrée du circuit de lecture qui est couplée aux photodétecteurs 112 des pixels 110.1 - 110.4 ;
- un troisième transistor 144.1 configuré pour connecter le circuit de lecture à la ligne de sortie 146, et ainsi autoriser une lecture séquentielle des pixels associés au circuit de lecture, comprenant une première électrode de source ou de drain couplée au deuxième transistor 142.1 et une deuxième électrode de source ou de drain formant la sortie du circuit de lecture qui est couplée à la ligne de sortie 146 de la matrice de pixels. Le circuit de lecture des pixels 110.1 - 110.4 délivre un signal sur la ligne de sortie 146 lorsque le troisième transistor 144 est à l'état passant.

En outre, le circuit de lecture des quatre autres pixels 110.5 - 110.8 est analogue à celui des quatre pixels 110.1 - 110.4.

Du fait que les pixels 110.1 - 110.8 sont ici regroupés pour former un macro-pixel, les grilles des deuxièmes transistors 142.1 et 142.2 sont couplées électriquement l'une à l'autre par la liaison électrique 122 et l'interrupteur 128 (en position fermée lors d'un regroupement de pixels), couplant ainsi l'une à l'autre les entrées des deux circuits de lecture des pixels 110.1 - 110.8.

De plus, les sorties des circuits de lecture de pixels 110.1 - 110.8 sont couplées électriquement l'une à l'autre de manière à délivrer en sortie, à un instant donné, une seule information d'image par macro-pixel.

Les sorties des circuits de lecture des deux pixels 110.1, 110.2 sont couplées, par l'intermédiaire de la ligne de sortie 146, à l'entrée d'un circuit de mémorisation dont l'information est ici numérisée grâce à la capacité de stockage présente dans l'ADC 120.

Le principe décrit ci-dessus en lien avec la figure 6 peut s'appliquer à l'invention en considérant que chaque pixel comporte plusieurs sous-pixels configurés pour réaliser une détection de gammes de longueurs d'onde différentes et destinés à être lus successivement par le circuit de lecture. Par exemple, les photodétecteurs 112.1 - 112.4 peuvent être vus comme faisant partie de quatre sous-pixels d'un premier pixel du capteur 100, et les photodétecteurs 112.5 - 112.8 peuvent être vus comme faisant partie de quatre sous-pixels d'un deuxième pixel du capteur 100. Dans ce cas, le circuit de lecture 160 de chaque pixel comporte plusieurs transistors de transfert (transistors 150.1 - 150.4 pour le premier pixel, et les transistors 150.5 - 150.8 pour le deuxième pixel) comprenant chacun une première électrode de source ou de drain couplée au photodétecteur de l'un des sous-pixels associés au circuit de lecture 160. Les circuits de lecture 160 de chaque pixel peuvent correspondre à l'un de ceux précédemment décrits en lien avec les figures 4 et 8-10.

Dans les modes de réalisation précédemment décrits, les signaux délivrés par tous les pixels sont lus. Selon un autre exemple de regroupement de pixels, il est possible qu'au sein d'un macro-pixel, certains pixels soient inactifs. Par exemple, il est possible de réaliser des macro-pixels chacun formé de dix pixels et dans lesquels les informations délivrées par seulement cinq de ces dix pixels sont lues, les cinq autres pixels étant considérés comme inactifs (les informations délivrées par ces cinq pixels inactifs ne sont pas lues). Les informations délivrées par les cinq pixels lus sont groupées pour former une seule information de lecture du macro-pixel. Un tel regroupement permet de multiplier par dix la cadence de lecture de l'imageur.

## Revendications

1. Capteur d'images (100), comprenant au moins une matrice de pixels (110) dans laquelle chaque pixel (110) comporte au moins :
- un photodétecteur (112) ;
- un circuit de lecture (160) comprenant une entrée couplée au photodétecteur (112) du pixel (110) et un élément d'amplification actif (114, 142, 162) configuré pour recevoir en entrée un signal de photodétection destiné à être délivré par le photodétecteur (112) et pour délivrer en sortie un signal de lecture représentatif du signal de photodétection ; **caractérisé en ce que**
- le capteur d'images (100) comporte également des moyens (122, 124, 126, 128, 130) de regroupement de pixels (110) configurés pour former des macro-pixels tels que dans chaque macro-pixel, les entrées des circuits de lecture d'au moins deux pixels (110) sont couplées l'une à l'autre, et les sorties des circuits de lecture desdits au moins deux pixels (110) sont couplées à l'entrée d'un seul élément de mémorisation comprenant au moins une capacité (119) ;
- la sortie de chaque circuit de lecture (160) est couplée à une entrée d'un élément de mémorisation différent de ceux auxquels les sorties des circuits de lecture (160) des autres pixels (110) sont reliées ;
- les moyens (122, 124, 126, 128, 130) de regroupement de pixels (110) comportent des interrupteurs (130) de connexion des circuits de lecture (160) interposés entre les sorties des circuits de lecture (160) et les entrées des éléments de mémorisation.

2. Capteur d'images (100) selon la revendication 1, dans lequel la matrice de pixels (110) est disposée dans un premier substrat (102), et les éléments de mémorisation sont disposés dans un deuxièmes substrat (104) distinct et superposé au premier substrat (102).

3. Capteur d'images (100) selon l'une des revendications précédentes, dans lequel les signaux de photodétection correspondent à des courants de photodétection, et les signaux de lecture correspondent à des tensions de lecture.

4. Capteur d'images (100) selon l'une des revendications précédentes, dans lequel chaque élément de mémorisation correspond à une charge capacitive (119) d'un convertisseur analogique / numérique (120), ou à une capacité de stockage (119), ou à une capacité présente entre le circuit de lecture (160) et le convertisseur analogique / numérique (120).

5. Capteur d'images (100) selon l'une des revendications précédentes, dans lequel chaque circuit de lecture (160) comporte au moins un amplificateur transimpédance capacitif formant l'élément d'amplification actif (114) du circuit de lecture (160).

6. Capteur d'images (100) selon la revendication 5, dans lequel chaque amplificateur transimpédance capacitif comporte au moins :
- un amplificateur opérationnel (114) ;
- une capacité d'intégration (116) couplant la sortie de l'amplificateur opérationnel (114) à une première entrée de l'amplificateur opérationnel (114), et
- un interrupteur (118) de réinitialisation couplé en parallèle à la capacité d'intégration (116) ;
- un interrupteur (126) de connexion de la capacité d'intégration (116) interposé entre l'entrée de l'amplificateur opérationnel (114) et une première électrode de la capacité d'intégration (116) .

7. Capteur d'images (100) selon l'une des revendications 1 à 4, dans lequel chaque circuit de lecture (160) comporte au moins :
- un premier transistor (140) de remise à zéro du pixel (110),
- un deuxième transistor (142) monté en drain commun et comprenant sa grille couplée au photodétecteur (112) associé au circuit de lecture (160),
- une source de courant (162) couplée à la source du deuxième transistor (142) et formant, avec le deuxième transistor (142), l'élément d'amplification actif du circuit de lecture (160),
- un troisième transistor (144) de sélection configuré pour connecter le circuit de lecture (160) à l'élément de mémorisation associé au dit circuit de lecture (160), comprenant une première électrode de source ou de drain couplée à la source du deuxième transistor (142) et une deuxième électrode de source ou de drain formant la sortie du circuit de lecture (160) qui est couplée au dit élément de mémorisation.

8. Capteur d'images (100) selon la revendication 7, dans lequel chaque circuit de lecture (160) comporte en outre :
- un nœud de mémorisation couplé à la grille du deuxième transistor (142) et formant une capacité (166) couplée en parallèle du premier transistor (140),
- un quatrième transistor de transfert (164) interposé entre la grille du deuxième transistor (142) et l'entrée du circuit de lecture (160).

9. Capteur d'images (100) selon l'une des revendications 7 ou 8, dans lequel la sortie de chaque élément de mémorisation est couplée à un transistor (168) monté en drain commun, dont la grille est couplée à la capacité (119) de l'élément de mémorisation et dont le drain est couplé à une source de courant (170).

10. Capteur d'images (100) selon l'une des revendications précédentes, dans lequel chaque circuit de lecture (160) est associé à plusieurs sous-pixels (110.1 - 110.8) configurés pour réaliser une détection de gammes de longueurs d'onde différentes et destinés à être lus successivement par le circuit de lecture (160), le circuit de lecture (160) comportant plusieurs transistors (150) de transfert comprenant chacun une première électrode de source ou de drain couplée au photodétecteur (112) de l'un des sous-pixels (110.1 - 110.8) associés au circuit de lecture (160).

## Patentansprüche

1. Bildsensor (100), der zumindest eine Matrix von Pixeln (110) umfasst, wobei jedes Pixel (110) zumindest enthält:
- einen Fotodetektor (112);
- eine Ausleseschaltung (160), die einen mit dem Fotodetektor (112) des Pixels (110) gekoppelten Eingang und ein aktives Verstärkungselement (114, 142, 162) enthält, das dazu ausgelegt ist, am Eingang ein von dem Fotodetektor (112) zu lieferndes Fotodetektionssignal zu empfangen und am Ausgang ein für das Fotodetektionssignal repräsentatives Auslesesignal zu liefern;
**dadurch gekennzeichnet, dass**
- der Bildsensor (100) ferner Mittel (122, 124, 126, 128, 130) zum Gruppieren von Pixeln (110) enthält, die dazu ausgelegt sind, Makropixel so zu bilden, dass in jedem Makropixel die Eingänge der Ausleseschaltungen von zumindest zwei Pixeln (110) miteinander gekoppelt sind und die Ausgänge der Ausleseschaltungen der zumindest zwei Pixel (110) mit dem Eingang eines einzigen Speicherelements gekoppelt sind, das zumindest eine Kapazität (119) umfasst;
- der Ausgang jeder Ausleseschaltung (160) mit einem Eingang eines Speicherelements gekoppelt ist, das sich von denen unterscheidet, mit denen die Ausgänge der Ausleseschaltungen (160) der anderen Pixel (110) verbunden sind;
- die Mittel (122, 124, 126, 128, 130) zum Gruppieren von Pixeln (110) Schalter (130) zum Verbinden der Ausleseschaltungen (160) umfassen, die zwischen den Ausgängen der Ausleseschaltungen (160) und den Eingängen der Speicherelemente geschaltet sind.

2. Bildsensor (100) nach Anspruch 1, wobei die Matrix von Pixeln (110) in einem ersten Substrat (102) angeordnet ist und die Speicherelemente in einem separaten zweiten Substrat (104) angeordnet sind, das dem ersten Substrat (102) überlagert ist.

3. Bildsensor (100) nach einem der vorhergehenden Ansprüche, wobei die Fotodetektionssignale Fotodetektionsströmen entsprechen und die Auslesesignale Auslesespannungen entsprechen.

4. Bildsensor (100) nach einem der vorhergehenden Ansprüche, wobei jedes Speicherelement einer kapazitiven Last (119) eines Analog-Digital-Wandlers (120) oder einer Speicherkapazität (119) oder einer zwischen der Ausleseschaltung (160) und dem Analog-Digital-Wandler (120) vorhandenen Kapazität entspricht.

5. Bildsensor (100) nach einem der vorhergehenden Ansprüche, wobei jede Ausleseschaltung (160) zumindest einen kapazitiven Transimpedanzverstärker aufweist, der das aktive Verstärkungselement (114) der Ausleseschaltung (160) bildet.

6. Bildsensor (100) nach Anspruch 5, wobei jeder kapazitive Transimpedanzverstärker zumindest enthält:
- einen Operationsverstärker (114);
- einen Integrationskondensator (116), der den Ausgang des Operationsverstärkers (114) mit einem ersten Eingang des Operationsverstärkers (114) koppelt, und
- einen Rücksetzschalter (118), der parallel zum Integrationskondensator (116) geschaltet ist;
- einen Schalter (126) zum Verbinden des Integrationskondensators (116), der zwischen dem Eingang des Operationsverstärkers (114) und einer ersten Elektrode des Integrationskondensators (116) angeordnet ist.

7. Bildsensor (100) nach einem der Ansprüche 1 bis 4, wobei jede Ausleseschaltung (160) zumindest enthält:
- einen ersten Rückstelltransistor (140) zum Zurückstellen des Pixels (110),
- einen zweiten Transistor (142), der als Common Drain geschaltet ist und dessen Gate mit dem Fotodetektor (112) gekoppelt ist, der der Ausleseschaltung (160) zugeordnet ist,
- eine Stromquelle (162), die mit der Source des zweiten Transistors (142) gekoppelt ist und zusammen mit dem zweiten Transistor (142) das aktive Verstärkungselement der Ausleseschaltung (160) bildet,
- einen dritten Transistor (144) zum Auswählen, der dazu ausgelegt ist, die Ausleseschaltung (160) mit dem der Ausleseschaltung (160) zugeordneten Speicherelement zu verbinden, mit einer ersten Source- oder Drain-Elektrode, die mit der Source des zweiten Transistors (142) gekoppelt ist, und einer zweiten Source- oder Drain-Elektrode, die den Ausgang der Ausleseschaltung (160) bildet, der mit dem Speicherelement gekoppelt ist.

8. Bildsensor (100) nach Anspruch 7, wobei jede Ausleseschaltung (160) ferner enthält:
- einen Speicherknoten, der mit dem Gate des zweiten Transistors (142) gekoppelt ist und eine Kapazität (166) bildet, die parallel zu dem ersten Transistor (140) gekoppelt ist,
- einen vierten Transistor (164) zum Transfer, der zwischen dem Gate des zweiten Transistors (142) und dem Eingang der Ausleseschaltung (160) geschaltet ist.

9. Bildsensor (100) nach einem der Ansprüche 7 oder 8, wobei der Ausgang eines jeden Speicherelements mit einem Transistor (168) gekoppelt ist, der als Common Drain geschaltet ist und dessen Gate mit der Kapazität (119) des Speicherelements und dessen Drain mit einer Stromquelle (170) gekoppelt ist.

10. Bildsensor (100) nach einem der vorhergehenden Ansprüche, wobei jeder Ausleseschaltung (160) eine Vielzahl von Subpixeln (110.1 - 110.8) zugeordnet ist, die dazu ausgelegt sind, die Erfassung verschiedener Wellenlängenbereiche durchzuführen, und die dazu bestimmt sind, nacheinander von der Ausleseschaltung (160) ausgelesen zu werden, wobei die Ausleseschaltung (160) mehrere Transfertransistoren (150) umfasst, die jeweils eine erste Source- oder Drain-Elektrode umfassen, die mit dem Fotodetektor (112) eines der Subpixel (110.1 - 110.8) gekoppelt ist, die der Ausleseschaltung (160) zugeordnet sind.

## Claims

1. Image sensor (100) comprising at least one pixel (110) array wherein each pixel (110) includes at least:
- a photodetector (112);
- a read-out circuit (160) comprising an input coupled to the photodetector (112) of the pixel (110) and an active amplifying element (114, 142, 162) configured to receive, at the input, a photodetection signal intended to be outputted by the photodetector (112) and to output a read signal representative of the photodetection signal;
**characterized in that**:
- the image sensor (100) further includes pixel (110) binning means (122, 124, 126, 128, 130) configured to form macropixels such that, in each macropixel, the inputs of the read-out circuits of at least two pixels (110) are coupled to one another, and the outputs of the read-out circuits of said at least two pixels (110) are coupled to the input of a single memory element comprising at least one capacitor (119);
- the output of each read-out circuit (160) is coupled to an input of a memory element that is different from those to which the outputs of the read-out circuits (160) of the other pixels (110) are connected;
- pixel (110) binning means (122, 124, 126, 128, 130) include connection switches (130) for the read-out circuits (160) inserted between the outputs of the read-out circuits (160) and the inputs of the memory elements.

2. Image sensor (100) according to claim 1, wherein the pixel (110) array is arranged in a first substrate (102), and the memory elements are arranged in a second substrate (104) that is separate from and superimposed on the first substrate (102).

3. Image sensor (100) according to one of the previous claims, wherein the photodetection signals correspond to photodetection currents, and the read signals correspond to read voltages.

4. Image sensor (100) according to one of previous claims, wherein each memory element corresponds to a capacitive load (119) of an analog-to-digital converter (120), or to a storage capacitor (119), or to a capacitor present between the read-out circuit (160) and the analog-to-digital converter (120).

5. Image sensor (100) according to one of previous claims, wherein each read-out circuit (160) includes at least one capacitive transimpedance amplifier forming the active amplifying element (114) of the read-out circuit (160).

6. Image sensor (100) according to claim 5, wherein each capacitive transimpedance amplifier includes at least:
- an operational amplifier (114);
- an integration capacitor (116) coupling the output of the operational amplifier (114) to a first input of the operational amplifier (114), and
- a reset switch (118) coupled in parallel to the integration capacitor (116);
- a connection switch (126) of the integration capacitor (116) inserted between the input of the operational amplifier (114) and a first electrode of the integration capacitor (116).

7. Image sensor (100) according to one of claims 1 to 4, wherein each read-out circuit (160) includes at least:
- a first reset transistor (140) of the pixel (110),
- a second transistor (142) in a common-drain assembly and comprising the gate thereof coupled to the photodetector (112) associated with the read-out circuit (160),
- a current source (162) coupled to the source of the second transistor (142) and forming, with the second transistor (142), the active amplifying element of the read-out circuit (160),
- a third selection transistor (144) configured for connecting the read-out circuit (160) to the memory element associated with said read-out circuit (160), comprising a first source or drain electrode coupled to the source of the second transistor (142) and a second source or drain electrode forming the output of the read-out circuit (160) which is coupled to said memory element.

8. Image sensor (100) according to claim 7, wherein each read-out circuit (160) further includes:
- a memory node coupled to the gate of the second transistor (142) and forming a capacitor (166) coupled in parallel with the first transistor (140),
- a fourth transfer transistor (164) inserted between the gate of the second transistor (142) and the input of the read-out circuit (160).

9. Image sensor (100) according to one of claims 7 or 8, wherein the output of each memory element is coupled to a transistor (168) in a common-drain assembly, the gate whereof is coupled to the capacitor (119) of the memory element and the drain whereof is coupled to a current source (170).

10. Image sensor (100) according to one of previous claims, wherein each read-out circuit (160) is associated with a plurality of subpixels (110.1 - 110.8) configured to detect different wavelength ranges and intended to be successively read by the read-out circuit (160), whereby the read-out circuit (160) includes a plurality of transfer transistors (150) each comprising a first source or drain electrode coupled to the photodetector (112) of one of the subpixels (110.1 - 110.8) associated with the read-out circuit (160).
